# EUROPÄISCHE PATENTSCHRIFT

(11) **EP 0 736 716 B1**
(45) Veröffentlichungstag und Bekanntmachung des Hinweises auf die Patenterteilung: **02.05.2001**
(21) Anmeldenummer: 96101713.4
(22) Anmeldetag: 07.02.1996
(51) Int. Cl.: F16L 37/12, F16L 21/06, F16L 33/02

(54) **Rohrverbindung**
Tube connection
Raccord à tubes

(30) Priorität: 07.04.1995 DE 19513058
(43) Veröffentlichungstag der Anmeldung: 09.10.1996
(73) Patentinhaber: Ford Global Technologies, Inc., Dearborn, Michigan 48126-2490 (US)
(72) Erfinder: Böhme, Dietmar, Dipl.-Ing., D-47259 Duisburg (DE); Gundl, Felix, D-73084 Salach (DE)
(74) Vertreter: Bonsmann, Manfred, Dipl.-Ing.

(56) Entgegenhaltungen:
- EP-A- 0 098 237
- DE-C- 4 027 032
- GB-A- 2 274 887
- US-A- 4 055 359
- US-A- 5 219 188

## Beschreibung

Die Erfindung betrifft eine Rohrverbindung, bei der ein axialer Stirnendbereich eines ersten Rohres in einen einen größeren Innendurchmesser als der Außendurchmesser des ersten Rohres aufweisenden axialen Stirnendbereich eines zweiten Rohres eingebracht ist, und mit zwischen der Außenseite des eingebrachten Stirnendbereiches und der Innenseite des aufnehmenden Stirnendbereiches angeordneten elastischen Dichtelementen, und mit einem in dem Verbindungsbereich außenseitig angeordneten, die Rohre in axialer Richtung arretierenden Sicherungsclip.

Eine derartige Rohrverbindung ist aus der DE-PS 30 47 867 bekannt. Der Sicherungsclip weist bei der bekannten Rohrverbindung einen etwa U-förmig ausgebildeten Querschnitt auf, wobei der Sicherungsclip in Wirklage mit den Stirnenden der Flanken des U gegen Außenbereiche der zu verbindenden Rohre anliegt und die Rohrverbindung in axialer Richtung formschlüssig sichert. Rohrverbindungen mit derartigen Sicherungsclipsen sind nicht für alle Anwendungsbereiche geeignet. So tritt bei Rohrverbindungen von Klimaanlage-Leitungen in Kraftfahrzeugen das Problem auf, daß zu verbindende, einerseits am Motor und andererseits am Fahrgestell befestigte Rohrleitungen nicht nur in axialer Richtung gegen ein unbeabsichtigtes Lösen, sondern auch gegen ein Verkanten bzw. Verkippen der zu verbindenden Rohre zu sichern sind. Der Sicherungsclip bei der bekannten Rohrverbindung stellt aber nicht sicher, daß die Rohre im Bereich der Rohrverbindung ohne zu verkippen axial zueinander fluchtend gehalten werden. Wenn das eine Rohr an der Karosserie und das andere Rohr am Motor eines Kraftfahrzeugs befestigt ist, kann - beispielsweise durch Vibrationsbewegungen des Motors relativ zur Fahrzeugkarosserie - der Fall auftreten, daß die Rohrverbindung so verkantet bzw. verkippt wird, daß die Rohre nicht mehr axial fluchten. Bestehen die elastischen Dichtelemente in der Rohrverbindung beispielsweise aus zwei in axialem Abstand zueinander angeordneten O-Ringen, so kann der Fall auftreten, daß bei einer Kippbewegung der Rohre in einer bestimmten Richtung einer der O-Ringe auf seiner einen Seite derart zusammengedrückt wird, daß auf der gegenüberliegenden Seite zeitweise eine Undichtigkeit auftritt. In diesem Fall kann dann im Rohrinneren enthaltenes Medium, z.B. Kältemittel, in den sich axial erstreckenden Zwischenraum zwischen den beiden O-Ringen eintreten. Wenn dann eine weitere Verkippbewegung derart erfolgt, daß der andere O-Ring so zusammengedrückt wird, daß auf der gegenüberliegenden Seite dieses O-Rings ebenfalls zeitweise eine Undichtigkeit auftritt, kann auf diese Weise Medium (z.B. Kältemittel) aus dem axialen Zwischenraum zwischen den beiden O-Ringen nach außen austreten. Diese nachteilige Wirkung wird als "Pumpeffekt" bezeichnet.

Eine weitere derartige Verbindung ist aus der US-A-5219188 bekannt. Aufgrund der dreiteiligen Ausbildung sowie der komplizierten Formgebung des Hülsenelements und der Verrastung zwischen diesem und dem zylindrischen Element ist die Herstellung der vorbekannten Rohrverbindung aufwendig. Darüber hinaus ist ein Verkippen der beiden Rohre zueinander nicht ausgeschlossen, da die Elemente der Rohrverbindung wegen der erforderlichen Gleitbewegung unvermeidlich mit Toleranzen behaftet sind, die einen Festsitz ausschließen, und daher Spalte in den Anlageflächen zwischen Steckelement und Hülsenelement einerseits und zwischen Steckelement und zylindrischem Element andererseits nicht auszuschließen sind.

Der Erfindung liegt zur Behebung des geschilderten Nachteils die Aufgabe zugrunde, eine Rohrverbindung der eingangs genannten Art dahingehend zu verbessern, daß kein Verkippen oder Verdrehung der Rohre auftritt.

Zur Lösung dieser Aufgabe ist vorgesehen, eine Rohrverbindung gemäß Anspruch 1.

Damit wird eine Kippbewegung im Bereich der Rohrverbindung verhindert und das Auftreten des "Pumpeffektes" vermieden, der z.B. im Falle einer Rohrverbindung bei Klimaanlageleitungen in einem Kraftfahrzeug zwischen einer motorseitig angebrachten und damit entsprechend bewegten Druckleitung mit einer eine Kondensorleitung bildenden, am Fahrgestell angebrachten, Rohrleitung auftreten kann, was zur Undichtigkeit führt und über einen längeren Zeitraum zu einer Entleerung der Klimaanlage führen kann. Durch den Sicherungsclip gemäß der Erfindung wird die Rohrverbindung demgegenüber nicht nur in bekannter Weise in axialer Richtung, sondern auch gegen ein Verkippen gesichert. Gleichzeitig wird durch die sich über einen relativ großen axialen Bereich erstreckenden Anlagebereiche eine radiale Fixierung der beiden Rohrenden bewirkt.

In zweckmäßiger Ausgestaltung der Erfindung kann vorgesehen sein, daß der Sicherungsclip einstückig aus Federstahl ausgebildet ist. Der einteilig ausgebildete Sicherungsclip kann durch eine Chromatierung korrosionsgeschützt ausgebildet sein und Rastnasen aufweisen, die ein sicheres Schießen des Sicherungsclips gewährleisten. Aus Sicherheitsgründen läßt sich der Sicherungsclip nur mit einem Spezialwerkzeug öffnen.

In weiterer Ausgestaltung der Erfindung kann vorgesehen sein, daß die zur flächigen Anlage gegen den einen kleineren Außendurchmesser als der Außendurchmesser des aufnehmenden Stirnendbereiches aufweisenden axialen Bereich des ersten Rohres vorgesehenen Teilbereiche des zweiten Anlagebereiches sich axial erstreckende rinnenartige Ausformungen aufweisen. Hierdurch wird erreicht, daß die Rundungen der Anlagebereiche in einfacher Weise an die unterschiedlichen Außendurchmesser, gegen welche sie anliegen sollen, angepaßt werden können, und zwar dadurch, daß der eine Anlagebereich in seinen einander zugeordneten Teilbereichen halbrund ausgewölbt wird, und daß der andere Anlagebereich in seinen einander zugeordneten Teilbereichen eine rinnenartige Ausformung aufweist, so daß ein Anpassen der Rundungen dieser Teilbereich an den "kleineren" Außendurchmesser möglich ist.

In weiterer Ausbildung der Erfindung kann vorgesehen sein, daß die Halbschalenelemente in ihrem Verbindungsbereich Ausnehmungen aufweisen. Hierdurch wird die Verschwenkmöglichkeit der beiden Halbschalenelemente erleichtert bzw. verbessert.

Die Erfindung wird nachfolgend anhand des in der Zeichnung schematisch dargestellten Ausführungsbeispiels näher erläutert. Es zeigen:
- Fig. 1: eine Rohrverbindung ohne Sicherungsclip;
- Fig. 2: eine Rohrverbindung mit einem Sicherungsclip gemäß der Erfindung, teilweise im Schnitt;
- Fig. 3: eine Stirnseitenansicht des Sicherungsclips in Einraststellung des Einrastmechanismus;
- Fig. 4: eine Darstellung entsprechend Fig. 3, jedoch in Öffnungsstellung, bei der die beiden Halbschalenelemente relativ zueinander verschwenkt sind;
- Fig. 5: eine Schnittdarstellung des Sicherungsclips längs der Linie V-V in Fig. 3.

Ein Rohr 1 ist mit einem axialen Stirnendbereich 2 in einen axialen Stirnendbereich 3 eines zweiten Rohres 4 eingebracht. Wie ersichtlich, ist der axiale Stirnendbereich 3 des zweiten Rohres 4 gegenüber dem normalen Außendurchmesser des Rohres 4 aufgeweitet und mit dem Rohr 4 über einen konischen Übergangsbereich 5 verbunden. An den Stirnendbereich 3 schließt sich ein Endflansch 6 an. Zwischen der Außenseite des eingebrachten Stirnendbereiches 2 und der Innenseite des aufnehmenden Stirnendbereiches 3 sind Dichtelemente 7 und 8 vorgesehen. Die Dichtelemente 7 und 8 können beispielsweise als O-Ringe ausgebildet sein.

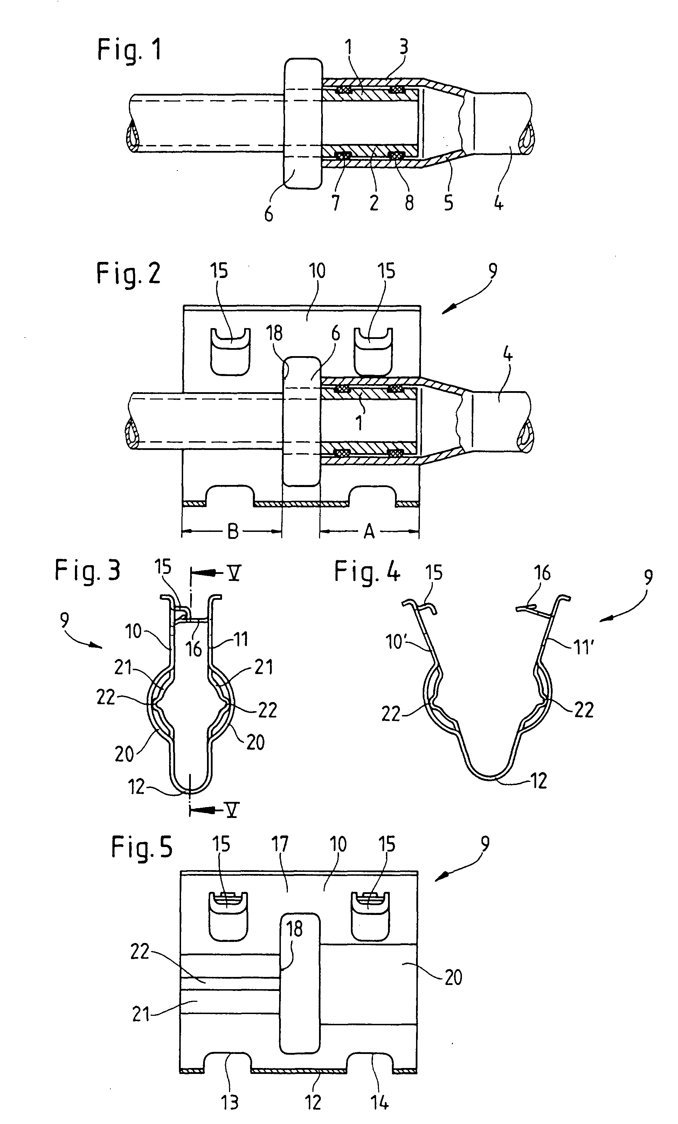

Wie Fig. 2 zeigt, ist in dem Verbindungsbereich außenseitig ein insgesamt mit 9 bezeichneter Sicherungsclip vorgesehen. Der Sicherungsclip 9 ist bei dem dargestellten Ausführungsbeispiel einstückig aus Federstahl ausgebildet und weist zwei relativ zueinander verschwenkbare Halbschalenelemente 10 und 11 auf. In der in Fig. 4 gezeigten verschwenkten Position sind die Halbschalenelemente mit 10' und 11' bezeichnet. In ihrem Verbindungsbereich 12 sind Ausnehmungen 13 und 14 vorgesehen. Die beiden Halbschalen können entgegen ihrer Federvorspannung mit einem Einrastmechanismus gegeneinander arretiert werden. Der Einrastmechanismus weist gegeneinander arretierbare Rastnasen 15 und 16 auf. In einem Mittelbereich 17 sind in beiden Halbschalenelementen 10 und 11 Öffnungen 18 vorgesehen, welche derart ausgebildet sind, daß sie in Wirklage den Endflansch 6 des Stirnendbereiches 3 des Rohres 4 aufnehmen und damit formschlüssig in axialer Richtung sichern können. Weiterhin weisen die Halbschalenelemente 10 und 11 jeweils Teilbereiche eines ersten Anlagebereiches 20 und eines zweiten Anlagebereiches 21 auf. Der Anlagebereich 20 erstreckt sich in axialer Richtung über einen Bereich A (Fig. 2), und der Anlagebereich 21 erstreckt sich in axialer Richtung über einen Bereich B (Fig. 2). Der Anlagebereich 21 weist in seinen Teilbereichen jeweils rinnenartige Ausformungen 22 auf. Damit wird dem Umstand Rechnung getragen, daß der Außendurchmesser des ersten Rohres 1 kleiner ist als der Außendurchmesser des aufnehmenden Stirnendbereiches 3, so daß trotz der einstückigen Ausbildung des Sicherungsclips 9 eine flächige Anlage sowohl des Anlagebereiches 20 als auch des Anlagebereiches 21 gegen den Rohrendbereich bzw. das Rohr 1 möglich ist. Der Mittelbereich 17 und die Anlagebereiche 20 und 21 selbst sind jeweils verbindungssteif ausgebildet. Der Sicherungsclip 9 umschließt in Wirklage bei eingerastetem Einrastmechanismus mit den Anlagebereichen 20 und 21 flächig die axialen Bereiche A und B der zu verbindenden Rohrenden und hält diese unverkippbar in einer axial zueinander fluchtenden Position. Durch die flächige feste Anlage wird gleichzeitig eine Sicherung gegen Verdrehung erreicht. Dadurch, daß der Endflansch 6 gegen die Kanten der Ausnehmung 18 anliegt, wird außerdem die Rohrverbindung in axialer Richtung gesichert.

## Patentansprüche

1. Rohrverbindung, bei der ein axialer Stirnendbereich eines ersten Rohres (1) in einen einen größeren Innendurchmesser als der Außendurchmesser des ersten Rohres (1) aufweisenden axialen Stirnendbereich (3) eines zweiten Rohres (4) eingebracht ist, und mit zwischen der Außenseite des eingebrachten Stirnendbereiches (2) und der Innenseite des aufnehmenden Stirnendbereiches (3) angeordneten elastischen Dichtelementen (7, 8) und mit einem in dem Verbindungsbereich außenseitig angeordneten, die Rohre (1, 4) in axialer Richtung arretierenden Sicherungsclip (9), der zwei relativ zueinander verschwenkbare und über einen Einrastmechanismus (15, 16) in Wirklage gegeneinander arretierbare Halbschalenelemente (10, 11) aufweist, die jeweils Teilbereiche eines ersten Anlagebereiches (20), der zur flächigen Anlage gegen die Außenseite des aufnehmenden Stirnendbereiches (3) vorgesehen ist, und eines zweiten Anlagebereiches (21) aufweisen, der zur flächigen Anlage gegen die Außenseite des sich an den eingebrachten Stirnendbereich (2) anschließenden axialen Bereich des ersten Rohres (1) vorgesehen ist, wobei der zweite Anlagebereich (21) verwindungssteif ausgebildet ist und die Anlagebereiche (20, 21) untereinander über einen verwindungssteifen Mittelbereich (17) verbunden sind, dadurch gekennzeichnet, daß der erste Anlagebereich (20) ebenfalls verwindungssteif ausgebildet ist und daß die Anlagebereiche (20, 21) in Wirklage in einer durch eine flächige feste Anlage eine Sicherung gegen Verdrehung bewirkenden Weise an den Außenseiten des ersten bzw. des zweiten Rohrs (1, 4) anliegen und sich jeweils über derartig ausgebildete axiale Bereiche (A, B) erstrecken, daß die Rohre (1, 4) in Wirkposition des Sicherungsclips (9) im Bereich der Rohrverbindung ohne zu verkippen in einer axial zueinander fluchtenden Lage gehalten sind.

2. Rohrverbindung nach Anspruch 1, dadurch gekennzeichnet, daß der Sicherungsclip (9) einstückig aus Federstahl ausgebildet ist und die Halbschalenelemente (10, 11) jeweils Teilbereiche des mit Einrichtungen (18) zur axialen Arretierung versehenen Mittelbereiches (17) aufweisen.

3. Rohrverbindung nach Anspruch 1 oder 2, dadurch gekennzeichnet, daß die zur flächigen Anlage gegen den einen kleineren Außendurchmesser als der Außendurchmesser des aufnehmenden Stirnendbereiches (3) aufweisenden axialen Bereich des ersten Rohres (1) vorgesehenen Teilbereiche des zweiten Anlagebereiches (21) sich axial erstreckende rinnenartige Ausformungen (22) aufweisen.

4. Rohrverbindung nach einem der Ansprüche 1 bis 3, dadurch gekennzeichnet, daß die Halbschalenelemente (10, 11) in ihrem Verbindungsbereich (12) Ausnehmungen (13, 14) aufweisen.

## Claims

1. Tube connection wherein an axial front end area of a first tube (1) is introduced into an axial front end area (3) of a second tube (4) having a greater inner diameter than the outer diameter of the first tube (1), and with elastic sealing elements (7, 8) positioned between the outer side of the introduced front end area (2) and the inner side of the receiving front end area (3), and with a securing clip (9) positioned in the connection area on the outer side and stopping the tubes (1, 4) in axial direction, wherein this securing clip (9) has two half shell elements (10, 11) which can be swivelled relative to one another and which via an engaging mechanism (15, 16) can be stopped in working position against one another, wherein these two half shell elements (10, 11) respectively have sub-areas of a first abutment area (20), which is provided for the flat abutment against the outer side of the receiving front end area (3), and of a second abutment area (21), which is provided for the flat abutment against the outer side of the axial area of the first tube (1) connecting on the introduced front end area (2), wherein the second abutment area (21) is torsionally strong and the abutment areas (20, 21) are connected between themselves via a torsionally strung middle area, characterised in that the first abutment area (20) is also formed in a torsionally strong way and in that the abutment areas (20, 21) in working position, through a flat secure abutment, in a way bringing about securing against turning lie on the outer sides of the first the second tube (1, 4) and extend respectively over thus formed axial areas (A, B), characterised in that the tubes (1, 4) in working position of the securing clip (9) in the area of the tube connection are held without tilting in a position axially aligned with one another.

2. Tube connection according to Claim 1 characterised in that the securing clip (9) is formed as one component from spring steel and the half shell elements (10, 11) respectively have sub-areas of the middle area (18) provided with devices for axial stopping.

3. Tube connection according to Claim 1 or 2 characterised in that the sub-areas of the second connection area (21) provided for flat abutment against the axial area of the first tube (1) having a smaller outer diameter than the outer diameter of the receiving front end area (3) have axially extending groove-like formations.

4. Tube connection according to one of the Claims 1 to 3 characterised in that the half shell elements (10, 11) have recesses (13, 14) in their connection area (12).

## Revendications

1. Raccord à tubes, dans lequel une zone d'extrémité frontale axiale d'un premier tube (1) est introduite dans une zone d'extrémité frontale axiale (3) d'un second tube (4) présentant un diamètre intérieur supérieur au diamètre extérieur du premier tube (1), et avec des éléments d'étanchéité élastiques (7, 8) disposés entre la face extérieure de la zone d'extrémité frontale insérée (2) et la face intérieure de la zone d'extrémité frontale de réception (3), et avec un collier ou clip de fixation (9) disposé côté extérieur dans la zone de raccordement et bloquant les tubes (1, 4) dans la direction axiale, qui comporte deux éléments en demi-coquilles (10, 11) pouvant pivoter l'un par rapport à l'autre et pouvant être bloqués l'un contre l'autre en position active par un mécanisme d'encliquement (15, 16), qui comportent en outre respectivement des zones partielles d'une première zone d'appui (20) qui est prévue pour l'appui affleurant contre la face extérieure de la zone d'extrémité frontale de réception (3) et d'une seconde zone d'appui (21), qui est prévue pour l'appui affleurant contre la face extérieure de la zone axiale du premier tube (1) se raccordant à la zone d'extrémité frontale insérée (2), la seconde zone d'appui (21) étant conçue de façon à résister à la torsion et les zones d'appui (20, 21) étant reliées l'une à l'autre via une zone centrale conçue de façon à résister à la torsion (17), caractérisé en ce que la première zone d'appui (20) est également conçue de façon à résister à la torsion et en ce que les zones d'appui (20, 21) en position active s'appuient, d'une manière garantissant par une position affleurante fixe une protection contre les torsions, contre les faces extérieures du premier et/ou du second tube (1, 4) et s'étendent respectivement sur ces zones axiales (A, B) formées de telle sorte que les tubes (1, 4) sont maintenus, en position active du collier de fixation (9) dans la zone du raccord à tubes, dans une position d'alignement axial réciproque empêchant le retournement ou une rotation relative.

2. Raccord à tubes selon la revendication 1, caractérisé en ce que le collier de fixation (9) est conçu d'une seule pièce dans un acier à ressort et que les éléments en demi-coquilles (10, 11) comportent respectivement des zones partielles de la zone centrale (17) dotée de dispositifs (18) pour le blocage axial.

3. Raccord à tubes selon la revendication 1 ou 2, caractérisé en ce que les zones partielles de la seconde zone d'appui (21) prévues pour l'appui affleurant contre la zone axiale du premier tube (1) de diamètre extérieur inférieur au diamètre extérieur de la zone d'extrémité frontale de réception (3) comportent des moulages de type goulottes (22) qui s'étendent dans la direction axiale.

4. Raccord à tubes selon l'une des revendications 1 à 3, caractérisé en ce que les éléments en demi-coquilles (10, 11) comportent des creux (13, 14) dans leur zone de raccordement (12).
